# EUROPEAN PATENT SPECIFICATION

(11) **EP 4 139 512 B1**
(45) Date of publication and mention of the grant of the patent: **17.04.2024**
(21) Application number: 21732505.9
(22) Date of filing: 21.04.2021
(51) Int. Cl.: D04H 1/425, D04H 1/4258, D04H 1/492, D04H 1/498, D04H 1/736, B32B 5/02, B32B 5/06, B32B 5/08, B32B 5/26, B32B 29/02

(54) **METHOD OF FORMING BIODEGRADABLE NONWOVEN FABRIC, AND NONWOVEN FABRIC**
VERFAHREN ZUR HERSTELLUNG EINES BIOLOGISCH ABBAUBAREN VLIESSTOFFES, SOWIE EIN VLIESSTOFF
PROCÉDÉ DE FORMATION D'UN TISSU NON TISSÉ BIODÉGRADABLE, ET TISSU NON TISSÉ

(30) Priority: 21.04.2020 PL 43360920
(43) Date of publication of application: 01.03.2023
(73) Proprietor: Kermiche, Gabriel, 00-759 Warszawa (PL); Galwiaczek, Artur, 05-135 Wieliszew (PL)
(72) Inventor: Kermiche, Gabriel, 00-759 Warszawa (PL); Galwiaczek, Artur, 05-135 Wieliszew (PL)
(74) Representative: Patpol Kancelaria Patentowa Sp. z o.o.
(86) International application number: PCT/IB2021/053296
(87) International publication number: WO 2021/214686

(56) References cited:
- EP-A1- 2 985 375
- EP-B1- 0 492 554
- WO-A1-2004/061182
- WO-A1-2014/112889
- CN-A- 101 619 520
- JP-A- 2011 032 631
- JP-A- 2012 211 412

## Description

### FIELD OF THE INVENTION

The invention relates to a method of forming a biodegradable nonwoven fabric, and the nonwoven fabric obtained by this method, to be used for the manufacture of cellulosic articles for clean-up work and sanitary products, and medical uses.

### BACKGROUND ART

At present, there is no biodegradable nonwoven fabric, which would be sufficiently strong and resistant against pilling, to be used in the sanitary article industry and for household uses, e.g. for clean-up work, at the same time being manufactured by a process, which could be deemed remunerative (cost-effective).

Due to a relatively low cost of cellulose pulp fibers, their good absorbing capacity and excellent dirt gathering ability, many kinds of composite nonwoven fabrics containing cellulose pulp fibers in their composition are used at present. Typically, nonwoven fabrics are made as a combination of pulp fibers with thermoplastic fibers made from petroleum-derived substances, optionally with other additives responsible for bonding short pulp fibers, which determine strength of a nonwoven fabric material.

Non-biodegradable petroleum-derived polymeric components render the nonwoven fabric obtained in the known process non-compostable and non-biodegradable, and moreover difficult and expensive to utilize after its use.

The problem of nonwoven fabrics made from cellulose pulp appears in the patent literature. Worthy of notice is European patent no. EP0492554B1, which describes a nonwoven fabric material, wherein cellulose pulp constitutes more than 70 % of a total weight of the nonwoven fabric. The nonwoven fabric is manufactured by applying pulp fibers on a thermally welded layer made from thermoplastic filaments forming so-called a spunbond layer, followed by water needling to bond both layers. According to the above-referenced description, the obtained nonwoven fabric employs up to 30 % of petroleum-derived polymers, which are non-biodegradable.

Next, from Chinese patent no. CN101619520B a process is known, wherein an aerodynamically formed layer of cellulose pulp is applied onto a spunbond layer made from polylactide (PLA) filaments, and on the top of both layers a fiber fleece formed in a carding machine is laid. The three components are then bonded by the known water needling process. The nonwoven fabric obtained therefrom may be biodegradable, when two conditions are met - when a carded product layer is made from biodegradable fibers, and when a final material is subjected to composting in an industrial composting plant, where sufficiently high temperature and humidity is maintained, to allow degradation of a spunbond composite made of PLA.

On the other hand, from the US patent US7062824B2 a process for the manufacture of a composite nonwoven fabric rich in cellulose pulp is known, wherein on a carded fiber layer pre-compacted on a calender, a layer of an aerodynamically formed cellulose pulp is applied, followed by bonding of both layers together by water needling to obtain a structure of a resistant nonwoven fabric. Also in this case, susceptibility of the obtained nonwoven fabric to biodegradation depends on a kind of fibers used in forming of a carded layer, i.e. susceptibility thereof to biodegradation.

Yet another processes for the manufacture of composite nonwoven fabric materials containing cellulose pulp are generally known, such as SPC - Spunbond+Pulp+Carded, SPS - Spunbond+Pulp+Spunbond, Arvell - manufactured according a scheme Meltblown+Pulp+Meltblown, wherein at least one of the layers, made from a non-biodegradable petroleum-derived polymer, is initially bonded before a pulp fiber layer is applied.

A process is generally known, wherein fibers of pneumatically pumped pulp are mixed with molten micro-fibers made of thermoplastic polymers, and such a mixture is formed into a layer. During the process of mixing and layer-forming the polymer fibers are warm and tacky enough to bond durably the pulp fibers. In such a process, a material is formed which is marketed under the brand name Coform.

In common use is also another process of bonding pulp fibers with thermally activated bonding components. In such a process, the bonding component is heated and melted after a fiber layer is formed in a special through-air dryer and calendered by hot rollers. Moreover, to provide surfaces of the obtained material with higher softness and slightly reduce release of fibers and dust from a nonwoven fabric surface, a finish on both surfaces of a thin latex layer of about 1-2 g/m² is applied. Such a material is manufactured by several producers in the world and sold under the name "airlaid".

The nonwoven fabrics of Coform and "airlaid" types are in general characterized by weak strength and high susceptibility to pilling, and ready release of fibers, even on gentle rubbing. Moreover, processes of production of these materials generate micro-sized plastic particles, which are not biodegradable and can be detrimental to the environment.

There is also a generally known process, in which pulp fibers and short synthetic - bonding fibrils (regenerated cellulose, PET, PP, two-component fibers) are subjected to mixing in a stream of water, and a wet-formed layer in the wetlaid process is finally subjected to water needling and thermal drying, during which thermal activation of thermoplastic fibers is performed, when their thermal activation is necessary. This type of a nonwoven fabric material has numerous advantages and drawbacks, depending on the types of fibers used in a mixture with pulp and a final finish. Depending on the above, the nonwoven fabric can be biodegradable, if it contains biodegradable (primarily cellulose) fibers only. In the case of a nonwoven fabric formed exclusively from biodegradable fibers, it is characterized by weak strength. If its strength has to be enhanced, at least 40 % of biodegradable synthetic short staple fibers should be used. Then higher strength of a nonwoven fabric is obtained, but at much higher costs, which makes the nonwoven fabric not cost-competitive relative to other existing biodegradable nonwoven fabric solutions.

In the case of using thermoplastic bonding fibers a cost of a nonwoven fabric is lower, the nonwoven fabric is more durable, but is no longer biodegradable, and a nonwoven fabric substrate, after use and partial degradation, becomes an emission source of micro-plastics to the environment.

A further process for manufacturing a composite nonwoven useful for producing wipes or tissues is described in EP 2 985 375 A1.

The object of the invention is to provide a biodegradable nonwoven fabric, fully neutral to the natural environment and compostable in normal soil conditions, which is, at the same time, just as cost-effective and useful as traditionally used non-biodegradable nonwoven fabrics. The object is implemented by a method according to the invention.

### DISCLOSURE OF THE INVENTION

The invention provides a method of forming a layered biodegradable nonwoven fabric including a layer of cellulose pulp, containing at least 50 % by weight of cellulose pulp based on dry weight of the nonwoven fabric, and a layer of carded fibers, wherein the layers are bonded by water needling, wherein the method comprises the following steps of:
(a) wet-forming any of the layers of the nonwoven fabric by dispersing cellulose pulp fibers in water, followed by straining out the pulp to obtain a layer of the cellulose pulp fibers,
(b) forming another layer in a method of carding fibers selected from the group consisting of viscose fibers, Lyocel (Tencel), cotton, cottonized flax, cottonized hemp fibers, or any mixture of at least two kinds of fibers selected from the group consisting of viscose fibers, Lyocel (Tencel), cotton, cottonized flax, cottonized hemp fibers, to obtain a layer of the carded fibers,
(c) applying the cellulose pulp fiber layer obtained in step (a) and the carded fiber layer obtained in step (b) in any order on each other and bonding with each other in a water needling process, followed by
(d) air-drying the nonwoven fabric obtained in step (c), wherein neither the cellulose pulp fiber layer nor the carded fiber layer is bonded nor compacted before they are applied onto each other.

In the method according to the invention, the steps (a) and (b) can be performed in various order or simultaneously. Preferably, straining out the cellulose pulp fibers in step (a) of the method according to the invention is performed by means of a forming head. More preferably, the cellulose pulp used in step (a) is made from a softwood and/or scrap paper. Preferably, cotton used in step (b) is unbleached and/or regenerated cotton. Also preferably the needling method in step (c) is conducted with use of a water needling loom. Also preferably, a through-air dryer is used for drying the nonwoven fabric in step (d).

In a preferred embodiment, the cellulose pulp fibers used in step (a) are obtained from scrap paper. In this case the cellulose pulp fibers are purified from mechanical impurities on screens and/or from chemical impurities by means of a flotation process. The cellulose pulp purification step is carried out before the step of forming the cellulose pulp fiber layer.

Also preferably, viscose fibers, including the Lyocel (Tencel) fibers, are obtained from regenerated wood cellulose.

In one preferred embodiment, in step (b) of the method according to the invention, the layer of carded fibers is formed from unbleached cotton and/or regenerated cotton and/or cottonized flax and/or cottonized hemp. More preferably, in this embodiment, after the water needling step (step (c)), the nonwoven fabric is subjected to bleaching with bleaching substances selected from the group consisting of ozone, hydrogen peroxide, chlorine dioxide, or any combination thereof. Most preferably, in this embodiment, if required, the nonwoven fabric is treated with the pH adjusting agents and/or fiber softeners.

In an alternative embodiment, if the layer of carded fibers is formed of unbleached cotton and/or regenerated cotton and/or cottonized flax and/or cottonized hemp, the nonwoven fabric obtained in step (c) is reeled over a perforated tube and treated with bleaching substances selected from the group consisting of ozone, hydrogen peroxide and chlorine dioxide, and, if required, pH adjusting agents and fiber softeners. More preferably, in this embodiment, prior to drying by means of through-air dryer in step (d), the nonwoven fabric is unreeled from the perforated tube and subjected to a dewatering process. Preferably, in this embodiment, a method of purifying the nonwoven fabric (i.e. the step wherein the nonwoven fabric is subjected to bleaching substances) is carried out in a pressurized apparatus.

Preferably, a dry unit weight of the water-dispersed cellulose pulp fiber layer formed in step (a) is equal or greater than a unit weight of the carded fibers, form which the layer in step (b) is formed.

The water-dispersed cellulose pulp fiber layer formed in step (a) is neither bonded nor compacted before contacting in step (c) with the carded fiber layer formed in step (b). Additionally, the carded fiber layer formed in step (b) is neither bonded nor compacted before contacting in step (c) with the water-dispersed cellulose pulp fiber layer formed in step (a).

Preferably, the water-dispersed cellulose pulp fiber layer formed in step (a) comprises 85-100 % by weight of bleached cellulose pulp fibers, admixed with 0-15 % by weight of short staple fibers of regenerated cellulose or polylactide (PLA), or a mixture thereof, based on dry weight of the cellulose pulp fiber layer.

Preferably, the carded fiber layer formed in step (b) contains an additive of biodegradable bicomponent fibers, preferably containing PLA (polylactide), in the maximum amount of up to 10 % by weight, based on dry weight of the carded fiber layer. Within the meaning of the present description, bicomponent fibers comprise a core and a shell made of two different materials or two different forms of materials characterized by different melting points. Preferably in the method according to the invention, bicomponent thermoplastic fibers are used, the shell and core of which are made of different PLA forms.

Preferably, the nonwoven fabric is dried in step (d) with air at the temperature sufficient to partially melt the shell of the biodegradable bicomponent fibers.

The invention provides also a biodegradable layered nonwoven fabric as defined in claim 1, containing at least 50 % by weight from cellulose pulp based on dry weight of the nonwoven fabric, one of its layers comprising softwood and/or scrap paper cellulose pulp, and the second of the layers is a layer of carded fibers formed from fibers selected from the group consisting of viscose fibers, Lyocell (Tencel) fibers, cotton fibers, cottonized flax fibers and cottonized hemp fibers, or a mixture of at least two kinds of the above-mentioned fibers.

Preferably, a unit weight of any of the layers varies in the range between 10 g/m² and 60 g/m², more preferably in the range from 15 g/m² to 45 g/m².

Preferably, the cellulose pulp layer comprises from 85 to 100 % by weight of softwood and/or scrap paper cellulose pulp and from 0 to 15 % by weight of biodegradable bicomponent fibers, a component of which is PLA (polylactide), and more preferably from 90 to 93 % by weight of softwood and/or scrap paper cellulose pulp and 7 to 10 % by weight of biodegradable bicomponent fibers, a component of which is PLA (polylactide), based on dry weight of the cellulose pulp layer.

Preferably, the carded fiber layer comprises from 90 to 93 % by weight of viscose fibers and/or Lyocel (Tencel) fibers and/or cotton and/or cottonized flax and/or cottonized hemp fibers, and 7 to 10 % by weight of biodegradable bicomponent fibers, a component of which is PLA (polylactide), based on dry weight of the carded fiber layer.

Also disclosed herein is a system of devices for forming a nonwoven biodegradable fabric, which in a processing line is provided with a pulper, a head forming a fiber layer from a water-dispersed cellulose pulp, a carding machine for forming a carded fiber layer, a needle loom for bonding fibers by means of kinetic energy of water micro-streams equipped with beams to form curtains of these micro-streams, a tank for water bath to oxidize impurities and bleach fibers, a through-air dryer and a reeling machine.

The nonwoven fabric manufactured by the method according to the invention does not constitute a source of plastic microparticle emission, which have a detrimental effect on the natural environment. Moreover, the process according to the invention contributes to reduction of costs of fibers used and to reduction of energy and chemical consumption in upstream processes, i.e. in the processes, in which the biodegradable fibers used in the nonwoven fabrics are manufactured.

An additional advantage of the nonwoven fabric according to the invention and the method for the manufacture thereof is a possibility to use in the manufacturing process the nonwoven fabric cellulose pulp reclaimed from scrap paper.

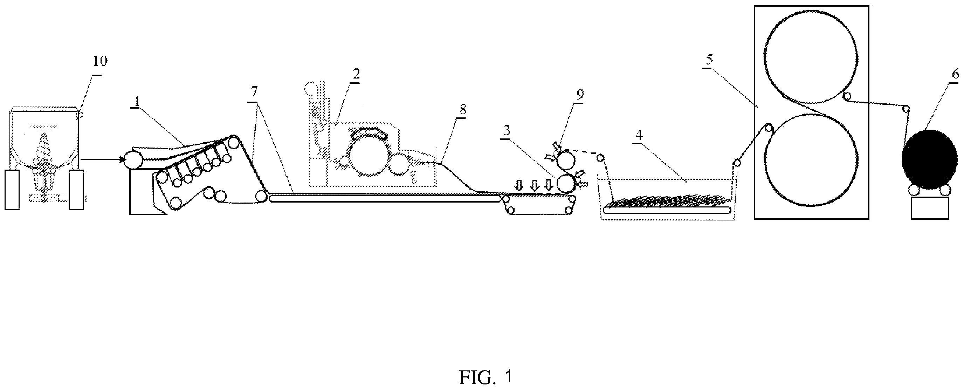

### BRIEF DESCRIPTION OF THE DRAWING

The object the invention was visualized in an embodiment in the attached figure of the drawing, wherein a scheme of a production line for the nonwoven fabric according to the invention is shown.

### DETAILED DESCRIPTION OF THE INVENTION

In the method of forming the biodegradable nonwoven fabric of the invention, which contains at least 50 % by weight of cellulose pulp, based on dry weight of the nonwoven fabric and consists of two layers, wherein the first layer of the nonwoven fabric is obtained by dispersing cellulose pulp fibers in water, from which cellulose pulp fiber layer 7 is wet-formed, followed by straining out by means of a forming head 1, while the second layer is formed by means of a process of carding viscose fibers and/or Lyocell (Tencel) fibers and/or cotton and/or cottonized flax and/or cottonized hemp fibers, to obtain the carded fiber layer 8. Subsequently, both layers, the cellulose pulp fiber layer 7 and the carded fiber layer 8 are applied on each other in any order and bonded in a water needling process by means of the needle loom 3, followed by air-drying of the obtained nonwoven fabric by means of the through-air dryer 5. The final product in a form of a bilayered nonwoven fabric is preferably reeled into a roll on a reeling machine 6 and/or cut. It can also be treated differently depending on the desired form.

If the dispersed cellulose pulp fibers are obtained from scrap paper, they are purified from mechanical impurities on screens and purified from chemical impurities by a flotation process. The step of purifying cellulose pulp precedes the step of forming the cellulose pulp fiber layer. The viscose fibers, Lyocell (Tencel) are preferably obtained from regenerated wood cellulose. If the carded fiber layer is made of unbleached cotton and/or regenerated cotton and/or cottonized flax and/or cottonized hemp, the nonwoven fabric, following the water needling process, is treated with bleaching substances selected from substances such as ozone, hydrogen peroxide, chlorine dioxide, and, if required, pH adjusting agents and fiber softeners. In one embodiment the nonwoven fabric is purified in pressurized apparatuses, i.e. the process for the treatment of the nonwoven fabric with bleaching substances is carried out under the elevated pressure and/or elevated temperature. A dry unit weight of the water-dispersed cellulose pulp fiber layer is at least equal to a unit weight of the carded fibers. The water-dispersed cellulose pulp fiber layer is not bonded nor compacted before contacting the carded fiber layer, and the carded fiber layer is not bonded nor compacted before contacting the water-dispersed cellulose pulp fiber layer.

In another embodiment, if the carded fiber layer is made of unbleached cotton and/or regenerated cotton and/or cottonized flax and/or cottonized hemp, the obtained nonwoven fabric is reeled over a perforated tube and treated with bleaching substances selected from ozone, hydrogen peroxide and chlorine dioxide, and, if required, pH adjusting agents and fiber softeners. The process can be also conducted in a pressurized apparatus. The nonwoven fabric is unreeled from the perforated tube and dewatered, and air-dried in turn by means of a through-air dryer.

The nonwoven biodegradable fabric according to the invention, manufactured in at least 50 % by weight of cellulose pulp, based on dry weight of the nonwoven fabric, comprises the first layer of softwood and/or scrap paper cellulose pulp, and the second layer comprising viscose fibers and/or Lyocell (Tencel) fibers and/or cotton and/or cottonized flax and/or cottonized hemp fibers. A unit weight of any of the layers is in the range between 10 g/m² and 60 g/m², and more preferably in the range from 15 g/m² to 45 g/m².

A system of devices for forming the nonwoven biodegradable fabric is provided in the processing line in a pulper 10, from which cellulose pulp is passed to a head 1 for forming a fiber layer 7 of water-dispersed cellulose pulp. Over the layer formed from the cellulose pulp fibers, a carded fiber layer 8, formed in a carding machine 2, is than applied. Both layers together are passed on a needle loom 3, where they are bonded by means of a curtain of water micro-streams generated from a needling beam 9. The bonded nonwoven fabric layers are introduced into a water bath in a tank 4, where oxidation of impurities and bleaching of the nonwoven fabric is performed. After washing, the nonwoven fabric from the tank 4 is passed to the through-air dryer 5, where it is dried. From the dryer, the finished nonwoven fabric is passed to the reeling machine 6, where it is reeled into a roll.

### EXAMPLE 1

A biodegradable composite nonwoven fabric is formed by assembling and water needling two layers described below. The first layer is formed in a process of carding 100 % viscose (regenerated cellulose) fibers and has a basis weight of 17-20 g/m². The second layer composed of 100 % of bleached softwood cellulose pulp fibers is wet-formed in a wetlaid process on a casting-straining headbox type machine and has a basis weight of 33-37 g/m². Both fiber layers are formed as non-bonded and non-compressed before their mutual contact. Over a fleece of the carded viscose fibers, the hydro-formed cellulose pulp fiber layer is applied, and the obtained bilayered structure is processed by water needling. The obtained nonwoven fabric is then dried, and subjected to further treatment by cutting and/or reeling. Depending on the required final form, the nonwoven fabric may be subjected to further treatment.

### EXAMPLE 2

A water-needled biodegradable composite nonwoven fabric was obtained in an analogous manner to the one described in Example 1. The first layer is formed in a process of carding 100 % Tencel (Lyocell) (regenerated cellulose) fibers and has a basis weight of 16-21 g/m². The second layer composed of 100 % of bleached softwood cellulose pulp fibers, is wet-formed in a wetlaid process on a casting-straining headbox type machine and has a basis weight of 32-38 g/m². Both fiber layers are formed as non-bonded and non-compressed before their mutual contact. Over a fleece of the carded Tencel fibers the hydro-formed bleached cellulose pulp fiber layer is applied, and the obtained bilayered structure is processed by water needling. The obtained nonwoven fabric is then dried, and subjected to further treatment by cutting and/or reeling. Depending on the required final form, the nonwoven fabric may be subjected to further treatment.

### EXAMPLE 3

A water-needled biodegradable composite nonwoven fabric was obtained in an analogous manner to the one described in examples above. The first layer is formed in a process of carding 100 % of non-bleached cotton fibers and has a basis weight of 20-25 g/m². The second layer composed of 100 % of cellulose pulp fibers obtained from scrap paper, is wet-formed in a wetlaid process on a casting-straining headbox type machine and has a basis weight of 25-35 g/m². Both fiber layers are formed as non-bonded and non-compressed before their mutual contact. Over a fleece of the carded cotton fibers the hydro-formed cellulose pulp fiber layer obtained from scrap paper is applied, and the obtained bilayered structure is successively subjected to a water needling and chemical purification process by means of bleaching oxidizers. In this example, samples were prepared using a hydrogen peroxide solution, ozone, chlorine dioxide as oxidizers in combination, with assistance of adjuvants, which improve the process. After chemical purification the nonwoven fabric is washed and dried. Then the obtained nonwoven fabric is cut and reeled. Depending on the required final form, the nonwoven fabric may be subjected to further treatment.

### EXAMPLE 4

A water-needled biodegradable composite nonwoven fabric was obtained in an analogous manner to the one described in examples above. The first layer is formed in a process of carding 100 % of viscose (regenerated cellulose) fibers and has a basis weight of 17-20 g/m². The second layer composed of 93 % by weight of bleached softwood cellulose pulp fibers and 7 % by weight of short staple thermoplastic bicomponent fibers containing PLA (polylactide), based on dry weight of the second layer, is wet-formed in a wetlaid process on a casting-straining headbox type machine and has a basis weight of 33-37 g/m². Both fiber layers are formed as non-bonded and non-compressed before their mutual contact. Over a fleece of the carded viscose fibers a layer of hydro-formed combination of the cellulose pulp fibers and bicomponent thermoplastic fibers is applied, and the obtained bilayered structure is processed by water needling and dried at the sufficiently high temperature, to partly melt a meltable shell of bicomponent fibers, but not to damage a thermoplastic fiber core. Then the obtained nonwoven fabric is cut and reeled. Depending on the required final form, the nonwoven fabric may be subjected to further treatment.

### EXAMPLE 5

A water-needled biodegradable composite nonwoven fabric was obtained in an analogous manner to the one described in examples above. The first layer is formed in a process of carding 100 % of bleached cotton fibers and has a basis weight of 22-25 g/m². The second layer composed of 100 % of mechanically purified and chemically bleached cellulose pulp fibers, obtained from scrap paper, is wet-formed in a wetlaid process on a casting-straining headbox type machine and has a basis weight of 25-35 g/m². Both fiber layers are formed as non-bonded and non-compressed before their mutual contact. Over a fleece of the carded bleached cotton fibers the layer of hydro-formed cellulose pulp fibers is applied, and the obtained bilayered structure is processed by water needling. The obtained nonwoven fabric is then dried, an subjected to further treatment by cutting and/or reeling. Depending on the required final form, the nonwoven fabric may be subjected to further treatment.

### EXAMPLE 6

A water-needled biodegradable composite nonwoven fabric was obtained such as described in examples above. The first layer is formed in a process of carding 100 % of cottonized hemp fibers and has a basis weight of of 25-35 g/m². The second layer, composed of 90 % by weight of bleached softwood cellulose pulp fibers and 10 % of short staple thermoplastic bicomponent fibers, one of components of which is PLA (Polylactide), based on dry weight of the second layer, is wet-formed in a wetlaid process on a casting-straining headbox type machine and has a basis weight of 35-45 g/m². Both fiber layers are formed as non-bonded and non-compressed before their mutual contact. Over a fleece of the carded cottonized hemp fibers a layer of hydro-formed combinations of the cellulose pulp fibers and bicomponent thermoplastic fibers is applied, and the obtained bilayered structure is processed by water needling and dried at the sufficiently high temperature, to partly melt a fusible shell of bicomponent fibers, but to not damage a thermoplastic fiber core. Then the obtained nonwoven fabric is cut and reeled. Depending on the required final form the nonwoven fabric may be subjected to further treatment.

### EXAMPLE 7

A water-needled biodegradable composite nonwoven fabric was obtained such as described in examples above. The first layer is formed in a process of carding 100 % viscose (regenerated cellulose) fibers and has a basis weight of 17-25 g/m². The second layer composed of 90 % by weight of bleached softwood cellulose pulp fibers and 10 % by weight of short staple regenerated cellulose fibers - viscose fibers), based on dry weight of the second layer, is wet-formed in a wetlaid process on a casting-straining headbox type machine and has a basis weight of 33-37 g/m². Both fiber layers are formed as non-bonded and non-compressed before their mutual contact. Over a fleece of the carded viscose fibers a layer of a combination of the hydro-formed fibers of cellulose and viscose pulps, and the obtained bilayered structure is processed by water needling. The obtained nonwoven fabric is then dried an subjected to further treatment by cutting and/or reeling. Depending on the required final form the nonwoven fabric may be subjected to further treatment.

### EXAMPLE 8

Samples of the nonwoven fabrics obtained in Examples 1 - 7 were subjected to tests to verify their strength and pilling resistance.

All samples of the nonwoven fabric obtained in a process according to the invention exhibited suitable properties allowing their use in cosmetic applications and a household.

## Claims

1. A method of forming a biodegradable nonwoven fabric containing at least 50 % by weight of cellulose pulp based on dry weight of the nonwoven fabric consisting of two layers bonded by means of water needling, wherein in the said method the first layer of the nonwoven fabric is manufactured by dispersing cellulose pulp fibers in water, from which the cellulose pulp fiber layer (7) is wet-formed, which layer is strained out, and the second layer is formed in a process of carding fibers selected from a group consisting of viscose fibers, Lyocell fibers, cotton fibers, cottonized flax fibers and cottonized hemp fibers, or any mixture thereof, to obtain the carded fiber layer (8), then both the cellulose pulp fiber layer (7) and the carded fiber layer (8) are applied onto each other in any order and are bonded in a water needling process by means of a needle loom (3), followed by air-drying of the obtained nonwoven fabric, wherein neither the cellulose pulp fiber layer nor the carded fiber layer is bonded nor compacted before they are applied onto each other.

2. The method according to claim 1, wherein the obtained nonwoven fabric is dried by means of the through-air dryer (5).

3. The method according to claim 1 or 2, wherein the first layer of the nonwoven fabric is manufactured from cellulose pulp obtained from scrap paper.

4. The method according to any of previous claims, wherein viscose fibers, including Lyocell fibers, used for forming the second layer, are obtained from regenerated wood cellulose.

5. The method according to any of previous claims, wherein the carded fiber layer is manufactured from unbleached cotton and/or regenerated cotton and/or cottonized flax and/or cottonized hemp, and the obtained nonwoven fabric after the water needling process is treated with bleaching substances selected from the group consisting of ozone, hydrogen peroxide, chlorine dioxide, or a mixture thereof, and optionally treated with pH adjusting agents and/or fiber softeners.

6. The method according to any of previous claims, wherein the carded fiber layer is manufactured from unbleached cotton and/or regenerated cotton and/or cottonized flax and/or cottonized hemp, and the obtained nonwoven fabric is reeled over a perforated tube and treated with bleaching substances selected from ozone, hydrogen peroxide and chlorine dioxide, or a mixture thereof, and optionally treated with pH adjusting agents and/or fiber softeners.

7. The method according to any of previous claims, wherein the water-dispersed cellulose pulp fiber layer in the manufactured nonwoven fabric has a dry unit weight equal or greater than a unit weight of the carded fiber layer.

8. The method according to any of previous claims, wherein the water-dispersed cellulose pulp fiber layer is composed of 85-100 % by weight of bleached cellulose pulp fibers, admixed with 0-15 % by weight of short staple regenerated cellulose fibers, PLA, or a mixture thereof, based on dry weight of the cellulose pulp fiber layer.

9. The method according to any of previous claims, wherein the carded fiber layer contains an additive in a form of biodegradable bicomponent fibers in a maximum amount of up to 10 % based on dry weight of the carded fiber layer.

10. The method according to claim 9, wherein the biodegradable bicomponent fibers in the carded fiber layer contain PLA.

11. The method according to claim 9 or 10, wherein the nonwoven fabric is dried with air at the temperature sufficient to partly melt the shell of the biodegradable bicomponent fibers contained in the carded fibers layer.

12. A biodegradable nonwoven fabric comprising two layers bonded by means of a water needling process, containing at least 50 % by weight of cellulose pulp based on dry weight of the nonwoven fabric, comprising two layers, wherein the first one of the layers, is the cellulose pulp fiber layer, which comprises a wet-formed softwood cellulose pulp and/or scrap paper fiber, and the second one of layers is the carded fiber layer, which comprises a carded viscose fiber and/or Lyocell fibers and/or cotton and/or cottonized flax and/or cottonized hemp fiber, wherein neither the cellulose pulp fiber layer nor the carded fiber layer is bonded nor compacted before they are applied onto each other.

13. The nonwoven fabric according to claim 12, wherein a unit weight of any of the layers is in the range between 10 g/m² and 60 g/m².

14. The nonwoven fabric according to claim 12 or 13, wherein the wet-formed cellulose pulp fiber layer contains from 90 to 93 % by weight of softwood and/or scrap paper cellulose pulp and from 7 to 10 % by weight of biodegradable bicomponent fibers, a component of which is PLA, based on dry weight of the cellulose pulp fiber layer.

15. The nonwoven fabric according to any of claims 12 - 14, wherein the carded fiber layer contains from 90 to 93 % by weight of viscose fibers and/or Lyocell fibers and/or cotton fibers and/or cottonized flax and/or cottonized hemp fibers and from 7 to 10 % by weight of biodegradable bicomponent fibers, a component of which is PLA, based on dry weight of the carded fiber layer.

## Patentansprüche

1. Ein Verfahren zur Herstellung eines biologisch abbaubaren Vliesstoffs, der mindestens 50 Gew.-% Zellstoffpulpe, bezogen auf das Trockengewicht des Vliesstoffs, enthält und aus zwei durch Wasservernadelung miteinander verbundenen Schichten besteht, wobei bei dem oben genannten Verfahren die erste Schicht des Vliesstoffs durch das Auflösen von Zellstoffpulpe-Fasern in Wasser hergestellt wird, woraus eine Faserschicht aus Zellstoffpulpe (7) im Nassverfahren entsteht, die danach ausgesiebt wird, und die zweite Schicht in einem Krempelverfahren der Fasern hergestellt wird, wobei die Fasern aus einer Gruppe ausgewählt werden, die Viskose-, Lyocell-, Baumwoll- und baumwollisierte Flachs- und baumwollisierte Hanffasern oder eine beliebige Mischung davon umfasst, um eine gekrempelte Faserschicht (8) zu erhalten, danach werden sowohl die Faserschicht aus der Zellstoffpulpe (7) als auch die Schicht aus gekrempelten Fasern (8) in beliebiger Reihenfolge aufeinander aufgelegt und in einem wasserbasierten Vernadelungsprozess mittels einer Nadelwebmaschine (3) verbunden, gefolgt von einer Lufttrocknung des erhaltenen Vliesstoffes, wobei weder die Zellstofffaserschicht, noch die gekrempelte Faserschicht vor dem Aufeinanderlegen verfestigt oder verdichtet wird.

2. Verfahren nach Anspruch 1, wobei der so erhaltene Vliesstoff mittels eines Durchlauftrockners (5) getrocknet wird.

3. Verfahren nach Anspruch 1 oder 2, wobei die erste Faserschicht des Vliesstoffs aus der Zellstoffpulpe hergestellt wird, die aus Altpapier gewonnen wird.

4. Verfahren nach einem der oben genannten Ansprüche, wobei die Viskosefasern, einschließlich Lyocell-Fasern, die zur Herstellung der zweiten Schicht verwendet werden, aus regeneriertem Holzzellstoff gewonnen werden.

5. Verfahren nach einem der oben genannten Ansprüche, wobei die gekrempelte Faserschicht aus ungebleichter Baumwolle und/oder regenerierter Baumwolle und/oder baumwollisierten Flachs- und/oder baumwollisierten Hanffasern hergestellt wird und der so erhaltene Vliesstoff nach der Wasservernadelung mit Bleichmitteln, ausgewählt aus einer Gruppe bestehend aus Ozon, Wasserstoffperoxid, Chlordioxid oder einer Mischung davon, und gegebenenfalls mit pH-Einstellmitteln und/oder Faserweichmachern behandelt wird.

6. Verfahren nach einem der oben genannten Ansprüche, wobei die gekrempelte Faserschicht aus ungebleichter Baumwolle und/oder regenerierter Baumwolle und/oder baumwollisierten Flachs- und/oder baumwollisierten Hanffasern hergestellt wird und der so erhaltene Vliesstoff auf einer perforierten Trommel aufgewickelt wird und danach mit Bleichmitteln, ausgewählt aus Ozon, Wasserstoffperoxid und Chlordioxid oder einer Mischung davon, und gegebenenfalls mit pH-Einstellmitteln und/oder Faserweichmachern behandelt wird.

7. Verfahren nach einem der oben genannten Ansprüche, wobei die in Wasser aufgelöste Faserschicht aus der Zellstoffpulpe im fertig hergestellten Vliesstoff ein spezifisches Gewicht im Trockenzustand aufweist, das gleich oder größer ist als das spezifische Gewicht der gekrempelten Faserschicht.

8. Verfahren nach einem der oben genannten Ansprüche, wobei die im Wasser aufgelöste Faserschicht aus 85-100 Gew.-% gebleichten Zellstofffasern besteht, mit Zugabe von 0-15 Gew.-% regenerierter kurzer Zellstofffasern, PLA oder von einem Gemisch davon, bezogen auf das Trockengewicht der Zellstofffaserschicht.

9. Verfahren nach einem der oben genannten Ansprüche, wobei die gekrempelte Faserschicht ein Zusatz in Form von biologisch abbaubaren Zweikomponenten-Fasern in maximaler Menge von bis zu 10 %, bezogen auf das Trockengewicht der gekrempelten Faserschicht, enthält.

10. Verfahren nach Anspruch 9, wobei die biologisch abbaubaren Zweikomponenten-Fasern in der gekrempelten Faserschicht PLA enthalten.

11. Verfahren nach Anspruch 9 oder 10, wobei der Vliesstoff mit Luft bei einer Temperatur getrocknet wird, die ausreicht, um die Hülle der in der gekrempelten Faserschicht enthaltenen biologisch abbaubaren Zweikomponenten-Fasern teilweise zu schmelzen.

12. Ein biologisch abbaubarer Vliesstoff, der aus zwei Schichten besteht, die mittels Wasservernadelung miteinander verbunden sind, und der mindestens 50 Gew.-% aus der Zellstoffpulpe besteht, bezogen auf das Trockengewicht des Vliesstoffs, der aus zwei Schichten besteht, wobei die erste Schichte die Zellstoffpulpe-Faserschicht ist, die eine nassgeformte Weichholz-Zellstoffpulpe und/oder Altpapierfasern enthält, und die zweite Schicht die gekrempelte Faserschicht ist, die gekrempelte Viskose- und/oder Lyocell- und/oder Baumwoll- und/oder baumwollisierte Flachs- und/oder baumwollisierte Hanffasern enthält, wobei weder die Zellstoffpulpe-Faserschicht, noch die gekrempelte Faserschicht gebunden oder verdichtet werden, bevor sie aufeinander aufgebracht werden.

13. Vliesstoff nach Anspruch 12, wobei das spezifisches Gewicht jeder von den Schichten im Bereich zwischen 10g/m² und 60g/m² liegt.

14. Vliesstoff nach Anspruch 12 oder 13, wobei die nassgeformte Zellstofffaserschicht 90 bis 93 Gew.-% Zellstoff aus Weichholz und/oder Altpapier und 7 bis 10 Gew.-% biologisch abbaubare Zweikomponenten-Fasern enthält, von denen eine Komponente PLA ist, bezogen auf das Trockengewicht der Zellstofffaserschicht.

15. Vliesstoff nach einem der Ansprüche 12 bis 14, **dadurch gekennzeichnet, dass** die gekrempelte Faserschicht 90 bis 93 Gew.-% Viskose- und/oder Lyocell- und/oder Baumwoll- und/oder baumwollisierte Flachs- und/oder baumwollisierte Hanffasern und 7 bis 10 Gew.-% biologisch abbaubare Zweikomponenten-Fasern, von denen eine Komponente PLA ist, bezogen auf das Trockengewicht der gekrempelten Faserschicht enthält.

## Revendications

1. Procédé de formation d'un tissu non-tissé biodégradable contenant au moins 50 % en poids de pâte de cellulose sur la base du poids sec du tissu non-tissé constitué de deux couches liées au moyen d'aiguilletage à l'eau, dans lequel, dans ledit procédé, la première couche du tissu non-tissé est fabriqué en dispersant des fibres de pâte de cellulose dans de l'eau, à partir de laquelle la couche de fibres de pâte de cellulose (7) est formée par voie humide, laquelle couche est égouttée, et la seconde couche est formée dans un processus de cardage de fibres sélectionnées dans un groupe constitué de fibres de viscose, fibres de Lyocell, fibres de coton, fibres de lin cotonnées et fibres de chanvre cotonisées, ou tout mélange de celles-ci, pour obtenir la couche de fibres cardées (8), puis à la fois la couche io de fibres de pâte de cellulose (7) et la couche de fibres cardées (8 ) sont appliqués les uns sur les autres dans un ordre quelconque et sont liés par un procédé d'aiguilletage à l'eau au moyen d'un métier à aiguilles (3), suivi d'un séchage à l'air du tissu non-tissé obtenu, dans lequel ni la couche de fibres de pâte de cellulose ni la couche de fibres cardées n'est ni collé ni compacté avant d'être appliqué les uns sur les autres.

2. Procédé selon la revendication 1, dans lequel le tissu non tissé obtenu est séché au moyen du séchoir à air traversant (5).

3. Procédé selon la revendication 1 ou 2, dans lequel la première couche du tissu non tissé est fabriquée à partir de pâte de cellulose obtenue à partir de vieux papiers.

4. Procédé selon l'une quelconque des revendications précédentes, dans lequel les fibres de viscose, y compris les fibres Lyocell, utilisées pour former la deuxième couche, sont obtenues à partir de cellulose de bois régénérée.

5. Procédé selon l'une quelconque des revendications précédentes, dans lequel la couche de fibres cardées est fabriquée à partir de coton écru et/ou de coton régénéré et/ou de lin cotonisé et/ou de chanvre cotonisé, et le tissu non-tissé obtenu après le processus d'aiguilletage à l'eau est traité avec des substances de blanchiment sélectionnées dans le groupe constitué de l'ozone, du peroxyde d'hydrogène, du dioxyde de chlore ou d'un mélange de ceux-ci, et éventuellement traité avec des agents d'ajustement du pH et/ou des adoucissants pour fibres.

6. Procédé selon l'une quelconque des revendications précédentes, dans lequel la couche de fibres cardées est fabriquée à partir de coton écru et/ou de coton régénéré et/ou de lin cotonné et/ou de chanvre cotonisé, et le tissu non tissé obtenu est enroulé sur un tube perforé et traité avec des substances de blanchiment sélectionnées parmi l'ozone, le peroxyde d'hydrogène et le dioxyde de chlore, ou un mélange de ceux-ci, et éventuellement traité avec des agents d'ajustement du pH et/ou des adoucissants pour fibres.

7. Procédé selon l'une quelconque des revendications précédentes, dans lequel la couche de fibres de pâte de cellulose dispersée dans l'eau dans le tissu non tissé fabriqué a un poids unitaire sec égal ou supérieur à un poids unitaire de la couche de fibres cardées.

8. Procédé selon l'une quelconque des revendications précédentes, dans lequel la couche de fibres de pâte de cellulose dispersées dans l'eau est composée de 85 à 100 % en poids de fibres de pâte de cellulose blanchies, mélangées à 0 à 15 % en poids de fibres de cellulose régénérées à fibres courtes. PLA, ou un mélange de ceux-ci, sur la base du poids sec de la couche de fibres de pâte de cellulose.

9. Procédé selon l'une quelconque des revendications précédentes, dans lequel la couche de fibres cardées contient un additif sous forme de fibres bicomposantes biodégradables en une quantité maximale allant jusqu'à 10 % sur la base du poids sec de la couche de fibres cardées.

10. Procédé selon la revendication 9, dans lequel les fibres bicomposantes biodégradables de la couche de fibres cardées contiennent du PLA.

11. Procédé selon la revendication 9 ou 10, dans lequel le tissu non-tissé est séché à l'air à la température suffisante pour faire fondre partiellement l'enveloppe des fibres bicomposantes biodégradables contenues dans la couche de fibres cardées.

12. Tissu non tissé biodégradable comprenant deux couches liées au moyen d'un processus d'aiguilletage à l'eau, contenant au moins 50 % en poids de pâte de cellulose sur la base du poids sec du tissu non tissé, comprenant deux couches, dans lequel la première des couches est la couche de fibres de pâte de cellulose, qui comprend une pâte de cellulose de résineux formée par voie humide et/ou des fibres de vieux papiers, et la seconde des couches est la couche de fibres cardées, qui comprend une fibre de viscose cardée et/ou des fibres de Lyocell et/ou du coton et /ou des fibres de lin cotonnées et/ou des fibres de chanvre cotonnées, dans lesquelles ni la couche de fibres de pâte de cellulose ni la couche de fibres cardées ne sont liées ni compactées avant d'être appliquées l'une sur l'autre.

13. Tissu non tissé selon la revendication 12, dans lequel le poids unitaire de l'une quelconque des couches est compris entre 10 g/m² et 60 g/m².

14. Tissu non tissé selon la revendication 12 ou 13, dans lequel la couche de fibres de pâte de cellulose formée par voie humide contient de 90 à 93 % en poids de pâte de cellulose de résineux et/ou de vieux papiers et de 7 à 10 % en poids de fibres bicomposantes biodégradables, dont un composant est le PLA, basé sur le poids sec de la couche de fibres de pâte de cellulose.

15. Tissu non tissé selon l'une quelconque des revendications 12 à 14, dans lequel la couche de fibres cardées contient de 90 à 93 % en poids de fibres de viscose et/ou de fibres de Lyocell et/ou de fibres de coton et/ou de lin cotonisé et/ou de fibres de chanvre cotonisé et de 7 à 10 % en poids de fibres bicomposantes biodégradables dont un composant est le PLA, sur la base du poids sec de la couche de fibres cardées.
